# EUROPEAN PATENT APPLICATION

(11) **EP 2 722 525 A2**
(43) Date of publication of application: **23.04.2014**
(21) Application number: 13188755.6
(22) Date of filing: 15.10.2013
(51) Int. Cl.: F04B 35/04, F04B 39/02, F04B 39/12

(54) **Reciprocating compressor**

(30) Priority: 17.10.2012 KR 20120115622
(71) Applicant: LG Electronics, Inc., Seoul 150-721 (KR)
(72) Inventor: Park, Jungsik, Seoul (KR); Park, Suho, Seoul (KR); Lee, Jongkoo, Seoul (KR); Lee, Susok, Seoul (KR)
(74) Representative: Vossius & Partner

(57) **Abstract**

A reciprocating compressor includes: a cylinder having a compressive space; a piston inserted into the compressive space of the cylinder and making a relative reciprocating movement with respect to the cylinder; and a plurality of resonance springs supporting both sides of a member that makes a reciprocating movement, among the cylinder and the piston, in a movement direction, wherein the resonance springs are configured as compression coil springs and at least one of the resonance springs is arranged in a direction such that a direction of side force of the spring does not correspond to a gravitation direction. Since side force and force based on self-weight become zero, sagging of a vibrator due to self-weight can be prevented.

## Description

### BACKGROUND OF THE INVENTION

### 1. Field of the Invention

The present disclosure relates to a reciprocating compressor, and more particularly, to a reciprocating compressor in which a mover and a piston make a reciprocating movement together.

### 2. Background of the Invention

In general, a reciprocating compressor is a device which sucks, compresses, and discharges a refrigerant as a piston thereof reciprocates (or makes a reciprocating movement) within a cylinder at a high speed. The reciprocating compressor may be divided into a connection type reciprocating compressor and a vibration type compressor according to a way in which a piston is driven.

The connection type reciprocating compressor compresses a refrigerant as a piston connected to a rotational shaft of a rotary motor reciprocates. Meanwhile, the vibration type reciprocating compressor compresses a refrigerant as a piston connected to a mover of a reciprocating motor vibrates to reciprocate in a cylinder. The present invention relates to a vibration type reciprocating compressor, and hereinafter, a vibration type reciprocating compressor will be simply referred to as a reciprocating compressor.

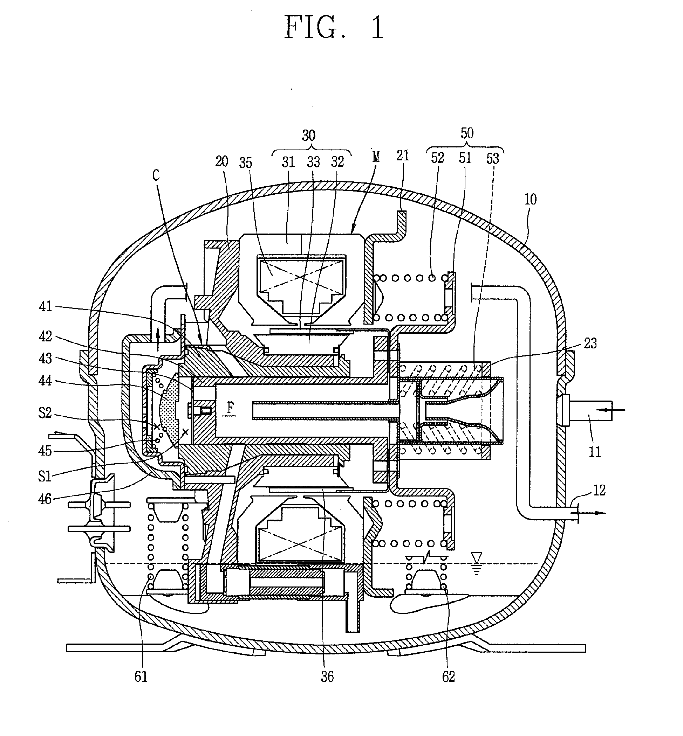

FIG. 1 is a cross-sectional view of a related art reciprocating compressor.

As illustrated in FIG. 1, in the related art reciprocating compressor, a frame 20 is elastically installed in an inner space of an airtight shell 10, stators 31 and 32 of the reciprocating motor 30 and a cylinder 41 of a compression unit as described hereinafter are fixed to the frame 20, a piston 42 coupled to a mover 33 of the reciprocating motor 30 as described hereinafter is inserted into the cylinder 41 and coupled to make a reciprocating movement therein.

A suction pipe 11 connected to an evaporator of a refrigerating cycle is installed to communicate with an inner space of the shell 10, and a discharge pipe 12 connected to a condenser of the refrigerating cycle is installed in a penetrating manner in the vicinity of the suction pipe 11.

A compression space S1 is formed in the cylinder 41, a suction flow path F guiding a refrigerant to the compression space S1 is formed in the piston 42, a suction valve 43 opening and closing the suction flow path F is installed in an end of the suction flow path F, and a discharge valve 44 is installed in a front end of the cylinder 41 to open and close the compression space S1 of the cylinder 41.

Meanwhile, a plurality of first resonance springs 52 and a plurality of second resonance springs 53 are installed in both sides of a spring supporter 51 to induce a resonant movement of the piston 42 in both sides of a movement direction of the piston 42.

The first resonance spring 52 and the second resonance spring 53 are configured as compression coil springs and arranged in a circumferential direction between a front side of the spring supporter 51 coupled to the mover 33 and the piston 42 and a flange 21 and between a rear side of the spring supporter 51 and a back cover 23 corresponding thereto.

Reference numeral 36 denotes a magnet, reference numeral 45 denotes a valve spring, reference numeral 46 denotes a discharge cover, reference numerals 61 and 62 denote support springs, reference letter C denotes a compression unit, and reference letter M denotes a motor unit.

In the related art reciprocating compressor, when power is applied to the coil 35 of the reciprocating motor 30, the mover 33 of the reciprocating motor 30 makes a reciprocating movement. Then, the piston 42 coupled to the mover 33 makes a reciprocating movement at a high speed within the cylinder 41 by the first resonance spring 52 and the second resonance spring 53 to suck a refrigerant into the shell through the suction pipe 11. Then, the refrigerant in the inner space of the shell 10 is sucked into the compression space S1 through the suction flow path F of the piston 42, and when the piston 42 makes a forward movement, the refrigerant is discharged from the compression space S1 and moves to a condenser (not shown) of the refrigerating cycle through the discharge pipe 12. This sequential processes are repeatedly performed.

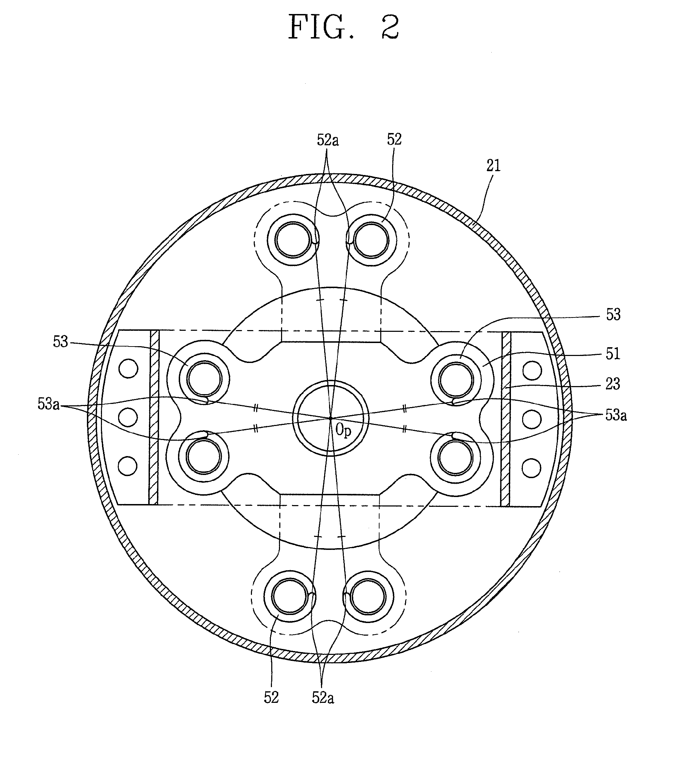

Here, since the first resonance spring 52 and the second resonance spring 53 are configured as compression coil springs, when the resonance springs 52 and 53 expand and contract, side force or torsion may be generated. Thus, in the related art, as illustrated in FIG. 2, a plurality of first resonance springs 52 and a plurality of second resonance springs 53 are provided and arranged in the circumferential direction and end turns 52a and 53a of the resonance springs adjacent in the circumferential direction face one another and are positioned at the same distance from the center OP of the piston 42, so that side force or torsion moment may be canceled out.

However, in the related art reciprocating compressor, although the end turns 52a and 53a of the resonance springs are arranged such that side force and torsion moment that may be generated as the first resonance springs 52 and the second resonance springs 533 contract and expand are canceled out, but sagging of the piston 42 due to self-weight thereof in terms of the characteristics of the compression coil springs is not sufficiently resolved, generating friction loss and abrasion in a particular portion with respect to the cylinder 41 when the piston 42 reciprocates. In particular, when the piston 42 moves backward for a sectional stroke, a rear side of the piston 42 may go down to be sloped, further increasing the friction loss and abrasion between the piston 42 and the cylinder 41.

### SUMMARY OF THE INVENTION

Therefore, an aspect of the detailed description is to provide a reciprocating compressor in which, when resonance springs inducing a resonant movement of a piston are configured as compression coil springs, side force or torsion moment that may be generated in terms of the characteristics of the resonant springs are canceled out and the piston is prevented from sagging to thus enhance straightness of the piston.

To achieve these and other advantages and in accordance with the purpose of this specification, as embodied and broadly described herein, a reciprocating compressor includes: a cylinder having a compressive space; a piston inserted into the compressive space of the cylinder and making a relative reciprocating movement with respect to the cylinder; and a plurality of resonance springs supporting both sides of a member that makes a reciprocating movement, among the cylinder and the piston, in a movement direction, wherein the resonance springs are configured as compression coil springs and at least one of the resonance springs is arranged in a direction such that a direction of side force of the spring does not correspond to a gravitation direction.

To achieve these and other advantages and in accordance with the purpose of this specification, as embodied and broadly described herein, a reciprocating compressor includes: a cylinder having a compressive space; a piston inserted into the compressive space of the cylinder and making a relative reciprocating movement with respect to the cylinder; and first resonance springs configured as compression coil springs and elastically supporting one side of the spring and second resonance springs configured as compression coil springs and elastically supporting the other side of the piston, wherein the first resonance springs are arranged in a vertical direction on the basis of the center of the piston, the second resonance springs are arranged in a horizontal direction on the basis of the center of the piston, and lower first resonance springs, among the first resonance springs, are arranged in a direction such that a direction of side force of the springs do not correspond to a gravitational direction.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a vertical-sectional view illustrating an example of a related art reciprocating compressor;
FIG. 2 is a schematic view illustrating an arrangement state of resonance springs of the reciprocating compressor of FIG. 1 in a circumferential direction;

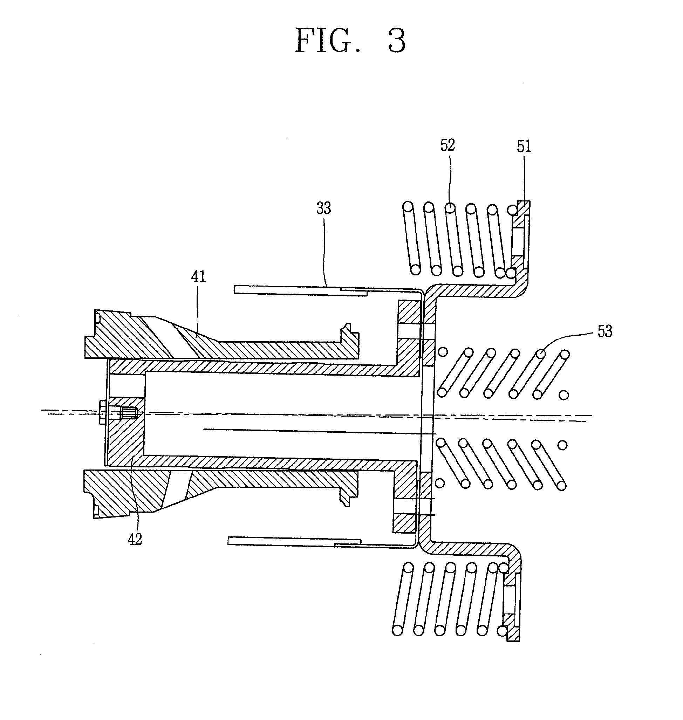

FIG. 3 is a schematic view illustrating a phenomenon that a piston sags when the resonance springs of FIG. 2 are arranged;
FIG. 4 is a front view illustrating an example in which a plurality of resonance springs are arranged in a circumferential direction such that end turns thereof face in a direction opposite to a gravitation direction in a reciprocating compressor according to an embodiment of the present invention;
FIG. 5 is a schematic view illustrating an arrangement of the resonance springs of FIG. 4;

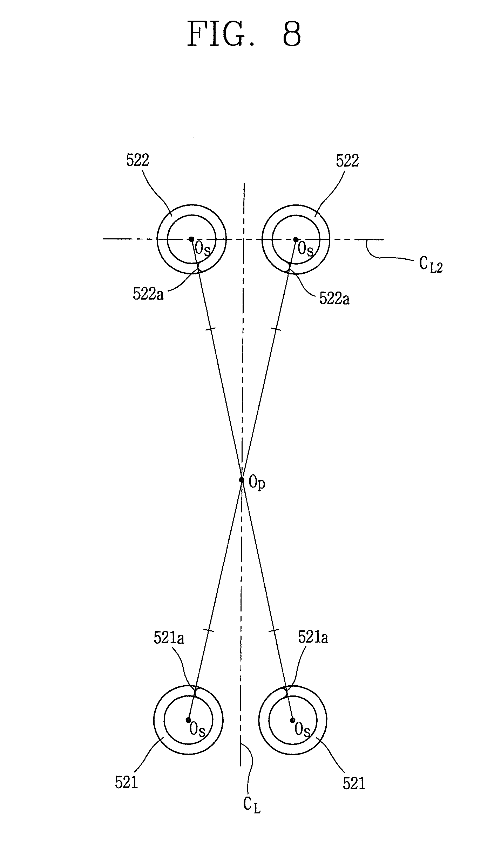

FIGS. 6 through 8 are schematic views illustrating another embodiment of an arrangement of resonance springs of FIG. 4; and

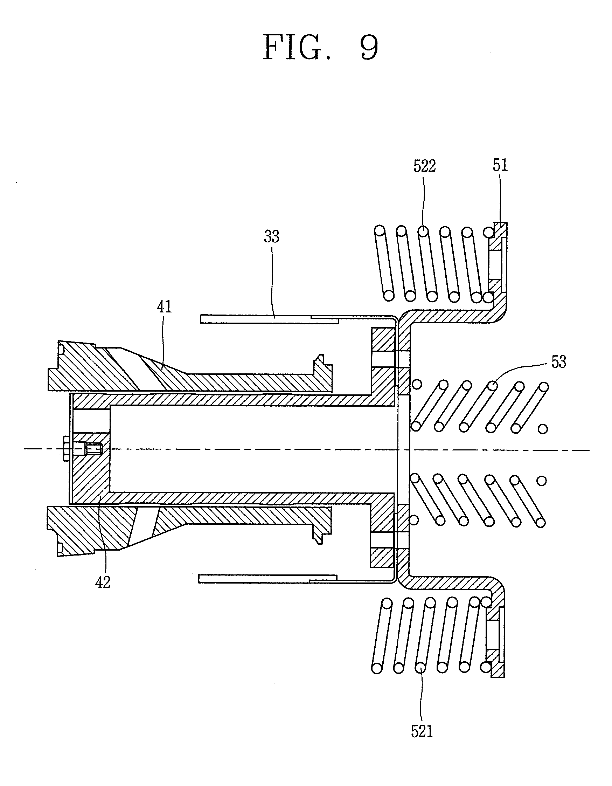

FIG. 9 is a schematic view illustrating straightness of a piston based on the arrangement of the resonance springs of FIGS. 4 and 5.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a reciprocating compressor according to embodiments of the present invention will be described in detail with reference to the accompanying drawings.

Referring to FIG. 1, in the reciprocating compressor according to the present embodiment, the frame 20 may be installed to be elastically supported by a plurality of support springs 61 and 62 as described hereinafter in an inner space of the shell 10, a motor unit M generating reciprocating force may be fixedly coupled to one side of the frame 20, and the compression unit C may be disposed between the frame 20 and the motor unit M to compress a refrigerant upon receiving reciprocating force from the motor unit M.

An inner space of the shell 10 is hermetically closed, the suction pipe 11 may be connected to a wall surface of one side of the shell 10 to guide a refrigerant of a refrigerating cycle to the inner space of the shell 10, and the discharge pipe 12 may be installed in a penetrating manner in one side of shell 10 adjacent to the suction pipe 11 in order to discharge a refrigerant compressed in the compression space S1 of the cylinder 41 as described hereinafter to the refrigerating cycle. A plurality of support springs 61 and 62 may be installed on the bottom of the shell 10, and the motor unit M and the compression unit C, as well as the frame 20, may be elastically supported by the support springs 61 and 62 such that they are spaced apart from the bottom of the shell 10 at a predetermined interval therebetween.

The reciprocating motor 30 forming the motor unit M may include the outer stator 31 coupled to the frame 20, the inner stator 32 disposed at an inner side of the outer stator 31 with a predetermined gap therebetween and coupled to the frame 20, and the mover 33 disposed in a gap between the outer stator 31 and the inner stator 32, having the magnet 36 corresponding to the coil 35, and reciprocating in a direction of magnetic flux induced by the magnet 36 and the coil 35.

The compression unit C may include the cylinder 41 insertedly coupled in the frame 20, the piston 42 inserted in the cylinder 41 in a reciprocating manner to compress a refrigerant, and a resonance unit 50 coupled to the piston 42 to guide a resonant movement of the piston 41.

The cylinder 41 has a cylindrical shape and insertedly coupled to the frame 20, and the discharge valve 44 may be detachably installed in a front end of the cylinder 41 to open and close the compression space S1. An inner circumferential surface of the cylinder 41 forms a bearing surface with the piston 42 made of cast iron, and thus, the cylinder may be made of cast iron or a material having hardness higher than at least that of the frame 20 in order to prevent eh cylinder from being abraded by the piston 42.

The piston 42 has the suction flow path F through which a refrigerant is sucked into the compression space S1 of the cylinder 41, and the suction valve 43 may be installed in a front end of the piston 42 to open and close the suction flow path F. The piston 42 may be made of a material the same as that of the cylinder 41 or may be made of at least a material having hardness similar to that of the piston 42 in order to reduce abrasion with respect to the cylinder 41.

The resonance unit 50 may include the spring support 51 coupled to the piston 42, and the first resonance spring 52 and the second resonance spring 53 installed ahead or behind the spring supporter 51. A single first resonance spring 52 and a single second resonance spring 53 may be provided, or a plurality of first resonance springs 52 and a plurality of second resonance springs 53 may be provided.

The same reference numerals are used for the same components as those of the related art.

Reference numeral S2 denotes a discharge space.

Operational effects of the reciprocating compressor according to the present embodiment are as follows.

Namely, when power is applied to the coil 35 of the reciprocating motor 30, magnetic flux is formed between the outer stator 31 and the inner stator 32. Then, the mover 33 disposed in the gap between the outer stator 31 and the inner stator 32 moves in a direction of the magnetic flux and continuously reciprocates by the resonance unit 50. Then, the piston 42 coupled to the mover 50 reciprocates within the cylinder 41 to repeatedly perform a series of processes of sucking, compressing, and discharging a refrigerant.

Here, the resonance springs 52 and 53 are configured as compression coil spring which are greatly deformed in a horizontal direction. Thus, when the piston 42 reciprocates, in particular, when the piston 42 performs a sucking stroke, the rear side of the piston 42 is released from the cylinder 41 to sag, and thus, the piston 42 is sloped to collide with the cylinder 41 to cause friction loss and abrasion. Thus, preferably, the resonance springs 52 and 53 are arranged such that end turns 52a and 53a of the surfaces supported by the piston 42 face in a direction opposite to a gravitation direction to reduce sagging of the piston 42.

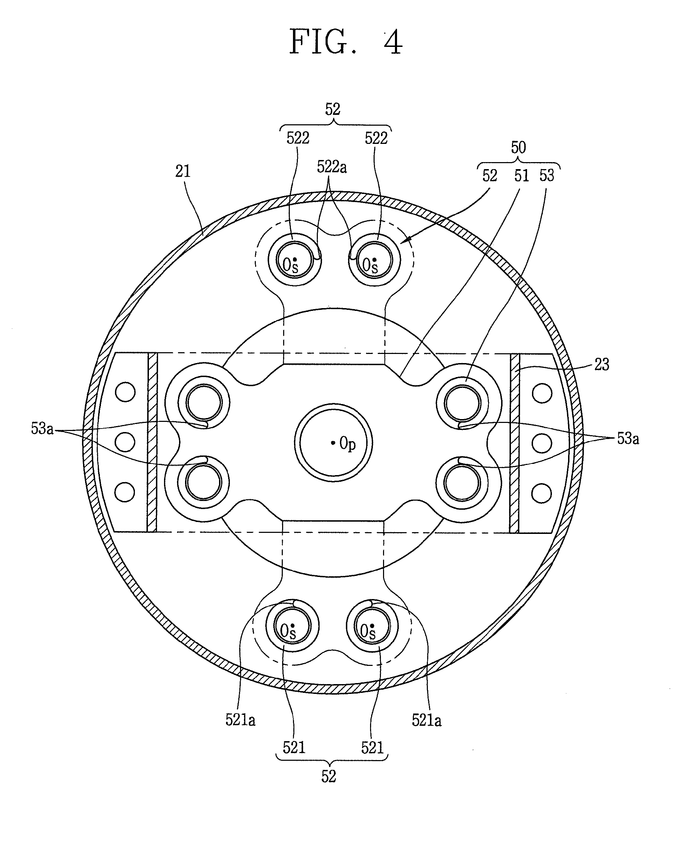

FIG. 4 is a front view illustrating an example in which a plurality of resonance springs are arranged in a circumferential direction such that end turns thereof face in a direction opposite to a gravitation direction in a reciprocating compressor according to an embodiment of the present invention.

As illustrated in FIG. 4, a plurality of first resonance springs 52 and a plurality of second resonance springs 53 may be arranged to be spaced apart from one another in the circumferential direction, respectively. Namely, the first resonance springs 52 may be arranged in a vertical direction (i.e., the side of gravitational direction and the opposite side of the gravitational direction) on the basis of the piston 42, and the second resonance springs 53 may be arranged in a horizontal direction on the basis of the piston 42. Accordingly, the first resonance springs 52 and the second resonance springs 53 may be alternately arranged at 90° intervals.

Pairs of first resonance springs 52 may be arranged up and down and pairs of the second resonance springs 53 may be arranged left and right.

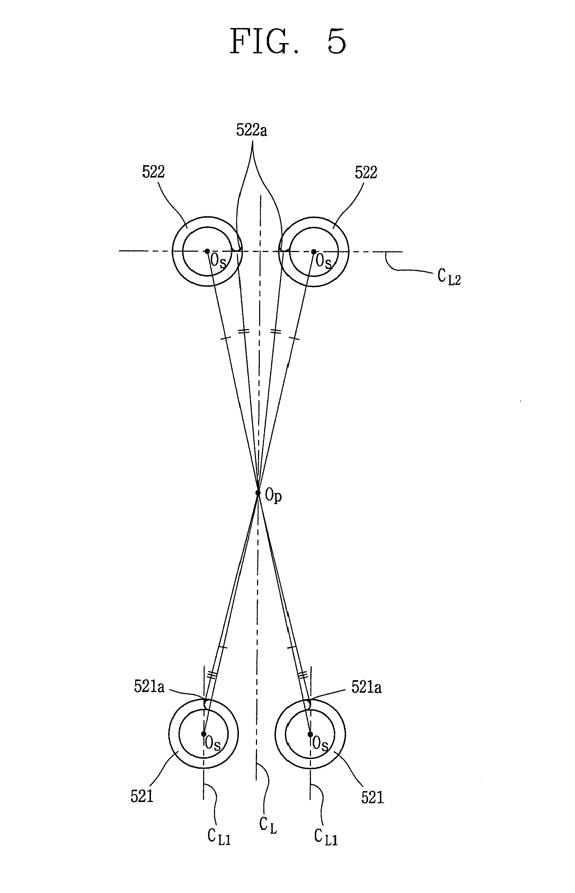

Here, as illustrated in FIG. 5, the resonance springs 52 and the second resonance springs 53 configured as compression coil springs may be arranged such that end turns of the pairs of resonance springs are symmetrical on the basis of a vertical line CL of the piston 42 in order to cancel out side force and torsion moment thereof.

For example, the first resonance springs (hereinafter, referred to as 'lower resonance springs') 521 positioned in a lower side of the piston 42 within the shell 10 in the gravitational direction may be arranged such that the end turns 521a thereof does not face in the gravitational direction, preferably, in a direction opposite to the gravitational direction. Namely, the first resonance springs 52 may be installed to be positioned at the same distance from the center Op of the piston 42 such that the end turns 521a of the lower resonance springs 521 are closer to the center Op of the piston 42 than the end turns 522a of the resonance springs (hereinafter, referred to as 'upper resonance springs') 522 in the opposite side of the gravitational direction.

A vertical line C_{L1} connecting the end turn 521a of one lower resonance spring 521 to the center Os of the resonance spring 521 and a vertical line C_{L1} connecting the end turn 521a of the other lower resonance spring 521 positioned in the other side on the basis of the center Os of the vertical line C_{L} of the piston to the center of the resonance spring 521 may be parallel.

A horizontal line C_{L2} connecting the end turns 522a of the upper resonance springs 522 may be arranged at a position perpendicular to the vertical line C_{L} of the piston 42 on the basis of the vertical line C_{L} of the piston 42.

Accordingly, a vibrator including the piston 42 can be effectively prevented from sagging due to self-weight according to an increase in a support load of the lower resonance spring 521.

Meanwhile, the upper resonance springs 522 may be arranged such that the end turns 522a thereof are positioned to be horizontal to the center Os of the springs, and the lower resonance springs 521 may be arranged such that the end turns 521a thereof are higher than the center Os of the springs (i.e., in the opposite side of gravitation).

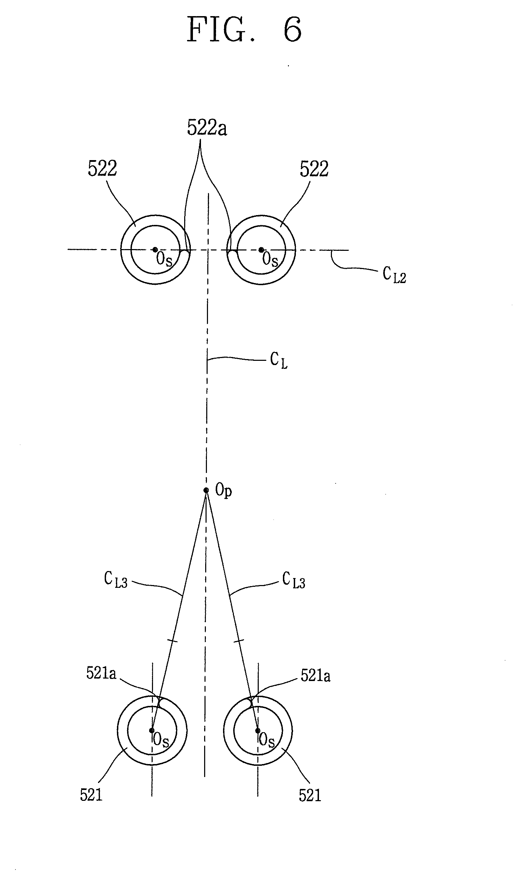

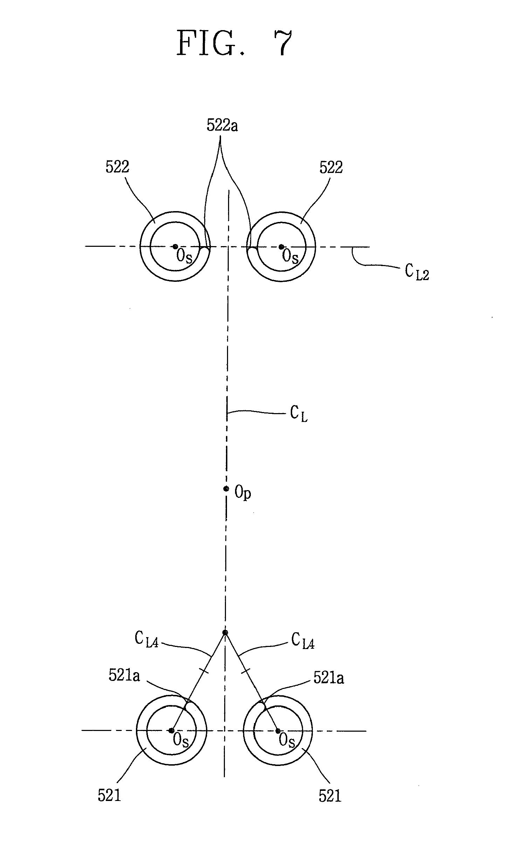

Namely, as illustrated in FIG. 6, the end turns 521a of the lower resonance springs 521 are arranged to be positioned in the virtual lines C_{L3} connecting the center Os of each of the resonance springs and the center Op of the piston 42, or as illustrated in FIG. 7, the end turns 521a of the lower resonance springs 521 may be arranged to face at about ±45° upwardly such that virtual lines C_{L4} passing through the center Os of each of the resonance springs 521 meet vertical lines below the center Op of the piston 42. Also, in this case, like the foregoing embodiment, the vibrator including the piston 42 can be effectively prevented from sagging due to self-weight according to an increase in a support load of the lower resonance spring 521.

As in the foregoing embodiments, the lower resonance springs 521 may be arranged such that the end turns 521a thereof are positioned to be different from the end turns 522a of the upper resonance springs 522, and alternatively, the lower resonance spring 521 and the upper resonance spring may be arranged such that the end turn 521a and the end turn 522a are symmetrical. Namely, the end turn 521a of the lower resonance spring 521 and the end turn 522a of the upper resonance spring 522 may positioned to be aligned with the center Op of the piston 42. Also, in this case, like the foregoing embodiment, the vibrator including the piston 42 can be effectively prevented from sagging due to self-weight according to an increase in a support load of the lower resonance spring 521. Besides, the piston 42 can be prevented from being excessively lifted due to misassembling of the lower resonance springs 52 or for any other reasons, enhancing straightness of the piston 42.

Thus, although the resonance springs inducing a resonant movement of the vibrator including the piston are configured as compression coil springs, side force and force based on self-weight become zero, thereby reducing sagging of the vibrator due to self-weight of the vibrator and enhancing straightness of the piston in reciprocating movement, whereby friction loss and abrasion between the cylinder and the piston can be prevented.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A reciprocating compressor comprising:
a cylinder (41) having a compressive space (S1);
a piston (42) inserted into the compressive space of the cylinder and configured for making a relative reciprocating movement with respect to the cylinder; and
a plurality of resonance springs (52, 53) arranged to support both sides of a member that makes a reciprocating movement, among the cylinder and the piston, in a movement direction,
wherein the resonance springs are configured as compression coil springs and at least one of the resonance springs is arranged in a direction such that a direction of side force of the spring does not correspond to a gravitation direction.

2. The reciprocating compressor of claim 1, wherein an end turning direction of an end turn (521a) supported by the member that makes a reciprocating movement among both end turns of at least one of the resonance springs does not correspond to a gravitational direction.

3. The reciprocating compressor of claim 1 or 2, wherein the plurality of resonance spring includes a lower resonance spring (521) positioned lower than a center (O_{P}) of the member that makes a reciprocating movement, an end turning direction thereof not corresponding to a gravitational direction.

4. The reciprocating compressor of claim 3, wherein the end turn of the lower resonance spring (521) is positioned to be aligned with the center (O_{P}) of the member that makes a reciprocating movement.

5. The reciprocating compressor of claim 3, wherein the plurality of resonance spring includes a further lower resonance spring (521), and wherein end turns of the two lower resonance springs are symmetrical on the basis of a vertical line (C_{L}) that passes through the center (O_{P}) of the member that makes a reciprocal movement.

6. The reciprocating compressor of claim 5, wherein each virtual line (C_{L1}) that connects the end turn of the lower resonance spring (521) and the center (O_{S}) of the lower resonance spring is parallel to a vertical line (C_{L}) that passes through the center (O_{P}) of the member that makes a reciprocating movement.

7. The reciprocating compressor of claim 5, wherein virtual lines (C_{L3}) that connect the end turn of the lower resonance spring (521) and the center (O_{S}) of the lower resonance spring pass through the center (O_{P}) of the member that makes a reciprocating movement.

8. The reciprocating compressor of claim 5, wherein virtual lines (C_{L4}) that connect the end turn of the lower resonance spring (521) and the center (O_{S}) of the lower resonance spring meet on a vertical line that passes through the center (O_{P}) of the member that makes a reciprocating movement, at a position lower than the center of the member.

9. The reciprocating compressor of claim 1 or 2, wherein the plurality of resonance springs includes a plurality of upper resonance springs (522) and a plurality of lower resonance springs (521), respectively positioned upper and lower than the center (O_{P}) of the member that makes a reciprocating movement, and
the upper resonance springs (522) and the lower resonance springs (521) are respectively arranged to be symmetrical with a predetermined interval therebetween on the basis of the vertical line that passes through the center (O_{P}) of the member that makes a reciprocating movement.

10. The reciprocating compressor of claim 9, wherein a space between the lower resonance springs (521) is smaller than a space between the upper resonance springs (522).
